# EUROPÄISCHE PATENTSCHRIFT

(11) **EP 2 923 094 B1**
(45) Veröffentlichungstag und Bekanntmachung des Hinweises auf die Patenterteilung: **01.03.2017**
(21) Anmeldenummer: 13762396.3
(22) Anmeldetag: 28.08.2013
(51) Int. Cl.: F16C 27/04, F16C 33/58, F16C 19/06

(54) **ELASTISCH ABGESTÜTZTE WÄLZLAGERANORDNUNG**
ROLLING BEARING ARRANGEMENT WITH ELASTIC SUPPORT
ENSEMBLE À ROULEMENT AVEC SUPPORT ÉLASTIQUE

(30) Priorität: 22.11.2012 DE 102012221369
(43) Veröffentlichungstag der Anmeldung: 30.09.2015
(73) Patentinhaber: Schaeffler Technologies AG & Co. KG, 91074 Herzogenaurach (DE)
(72) Erfinder: BEDENK, Johannes, 97531 Theres (DE); PRÖSCHEL, Christian, 97332 Volkach (DE)
(86) Internationale Anmeldenummer: PCT/DE2013/200140
(87) Internationale Veröffentlichungsnummer: WO 2014/079419

(56) Entgegenhaltungen:
- DE-A1-102010 061 926
- DE-U1-202006 019 697
- US-A- 3 653 731
- US-A- 3 709 570

## Beschreibung

### Gebiet der Erfindung

Die Erfindung betrifft ein Wälzlager, welches insbesondere zum Einsatz in einer Gasturbine, beispielsweise einem Strahltriebwerk eines Flugzeugs, geeignet ist und einen elastisch an ein Gehäuseteil angebundenen Außenring umfasst.

### Hintergrund der Erfindung

Wälzlager der eingangs genannten Art sind beispielsweise aus der US 7,384,199 B2, der US 6,443,698 B1, sowie der US 6,413,046 B1 und der US 3 709 570 A bekannt

In jedem dieser Fälle ist ein Außenring eines als Rollenlagers ausgebildeten Radial-Wälzlagers in axialer Richtung durch einen Federabschnitt verlängert, welcher an einem Gehäuseteil durch eine Verschraubung befestigt ist.

### Aufgabe der Erfindung

Der Erfindung liegt die Aufgabe zugrunde, ein Wälzlager mit elastisch aufgehängtem Außenring gegenüber dem genannten Stand der Technik insbesondrere hinsichtlich des benötigten Bauraums weiterzuentwickeln.

### Zusammenfassung der Erfindung

Diese Aufgabe wird erfindungsgemäß gelöst durch eine Wälzlageranordnung mit den Merkmalen des Anspruchs 1. Diese insbesondere für eine Gasturbine geeignete Wälzlageranordnung umfasst
- eine Anzahl zwischen einem Innenring und einem Außenring mangeordneter Wälzkörper,
- eine Gehäusekonstruktion, an welcher der Außenring federnd befestigt ist, wobei der Außenring einteilig aufgebaut ist und einen eine Laufbahn für die Wälzkörper bildenden Laufbahnabschnitt, einen Federabschnitt und einen mit der Gehäusekonstruktion verschraubten Flansch aufweist, wobei
- der Federabschnitt aus einer Mehrzahl an Federstäben aufgebaut ist, welche einerseits an einen stirnseitig an den Laufbahnabschnitt anschließenden Umlenkabschnitt und andererseits an den Flansch anschließen, radial außerhalb des Laufbahnabschnitts angeordnet sind und hierbei in axialer Richtung einerseits nicht über den Umlenkabschnitt und andererseits nicht über den Laufbahnabschnitt hinausragen, und
- die Gehäusekonstruktion mindestens eine Gehäusescheibe umfasst, wobei
- die Gehäusekonstruktion sowohl einen radialen als auch einen axialen Anschlag gegenüber dem Laufbahnabschnitt des Außenrings bildet.

Der im Anspruch 1 genannte Begriff "Innenring" ist funktonal zu verstehen und schließt jegliches radial innerhalb des Außenringes angeordnetes, rotierbares Bauteil ein, auf welchem die Wälzkörper abrollen. Das Wälzlager ist in jedem Fall als Radiallager, vorzugsweise als Kugellager, ausgebildet,

Der Umlenkabschnitt stellt einen Teil des Außenrings dar und kann ringförmig gestaltet oder durch an den Laufbahnabschnitt anschließende Abschnitte der Federstäbe gebildet sein. In beiden Fällen ist durch den Umlenkabschnitt eine Verbindung zwischen dem Laufbahnabschnitt und den Federstäbe beziehungsweise den radial von dem Laufbahnabschnitt beabstandeten Abschnitten der Federstäbe hergestellt.

Die Erfindung geht von der Überlegung aus, dass bei der Wälzlagerung von schnell laufenden Turbinenwellen eine elastische Aufhängung des WälzlagerAußenrings im Gehäuse sinnvoll ist, um die Einleitung von Schwingungen in das Gehäuse abzumildern.

Gegenüber dem Stand der Technik zeichnet sich die Erfindung dadurch aus, dass die Federstäbe radial genau außerhalb des Laufbahnabschnitts, das heißt des Außenrings im engeren Sinne, angeordnet sind. Im Vergleich zu einem Wälzlager mit Außenring ohne elastische Aufhängung ist der Platzbedarf des erfindungsgemäßen Wälzlager in axialer Richtung somit höchstens geringfügig vergrößert. Die Angaben "axial" und "radial" beziehen sich stets auf die Rotationsachse des Wälzlagers. Die Federstäbe verlaufen größtenteils, in bevorzugter Ausgestaltung vollständig, in axialer Richtung. Zwischen zwei benachbarten Federstäben befindet sich jeweils eine Aussparung, wobei die Breite der Aussparung, in Umfangsrichtung des Wälzlagers betrachtet, in einer beliebigen Relation zur Breite der Federstäbe stehen kann. Beispielsweise kann die Breite der Aussparung der Breite eines jeden Federstabes entsprechen. Ebenso ist es möglich, dass die Aussparungen wesentlich schmaler oder breiter als die Federstäbe sind. Die Länge eines Federstabes, das heißt seine Erstreckung in axialer Richtung, ist nicht notwendigerweise größer als seine in Umfangsrichtung gemessene Breite.

Der ebenso wie der aus den Federstäben gebildete Federabschnitt einen Teil des Außenrings darstellende Flansch erstreckt sich von der dem Umlenkabschnitt abgewandten Seite des Federabschnitts aus radial nach außen und ist an einer Gehäusescheibe, welche fest mit weiteren Teilen der Gehäuskonstruktion verbunden ist, befestigt.

Die Gehäusekonstruktion, insbesondere Gehäusescheibe, bildet in Ausgestaltung der Erfindung einen Anschlag gegenüber dem Laufbahnabschnitt in radialer Richtung und mindestens einer axialen Richtung, bevorzugt in beiden axialen Richtungen. Im erstgenannten Fall, das heißt bei einem einseitigen axialen Anschlag, ragt die Gehäusescheibe beispielsweise von außen in einen Absatz, welcher an einer Stirnseite des Laufbahnabschnitts gebildet ist, während im Fall eines beidseitigen axialen Anschlags die Gehäusescheibe beispielsweise in eine Nut am Außenumfang des Laufbahnabschnitts eingreift.

Sowohl bei einseitiger als auch bei zweiseitiger Begrenzung der Verlagerung des Laufbahnabschnitts durch die Gehäusekonstruktion, das heißt bei ein- oder zweiseitigem axialem Anschlag, ist gemäß einer vorteilhaften Weiterbildung durch die Gehäusekonstruktion zusätzlich ein Anschlag des Laufbahnabschnitts in mindestens einer Umfangsrichtung, vorzugsweise in genau einer Umfangsrichtung, gegeben. Um eine solche Gestaltung zu ermöglichen, kann ein unmittelbar mit dem Außenrings zusammenwirkendes Teil der Gehäusekonstruktion mehrteilig aufgebaut sein. Ebenso ist es möglich, den Laufbahnabschnitt sowie die Gehäusekonstruktion derart zu gestalten, dass der Außenring in der Art eines Bajonettverschluss in der Gehäusekonstruktion montierbar ist.

Gemäß einer vorteilhaften Weiterbildung befindet sich zwischen der im Wesentlichen zylindrischen Außenfläche des Laufbahnabschnitts und dem von dieser Fläche radial beabstandeten Federabschnitt ein Dämpfungselement, welches beispielsweise aus einem Polymermaterial oder aus Metallschaum gefertigt sein kann.

Der Vorteil der Erfindung liegt insbesondere darin, dass durch eine raumsparende elastische Außenringaufhängung, optional mit zusätzlicher Dämpfung, sowohl eine Schwingungstilgung als auch eine Überlastsicherung in sämtlichen relevanten Belastungsrichtungen, nämlich in radialer Richtung, in beiden axialen Richtung, sowie in einer Umfangsrichtung, gegeben ist.

### Beschreibung der Zeichnungen

Nachfolgend wird ein Ausführungsbeispiel der Erfindung anhand einer Zeichnung näher erläutert. Hierin zeigen:
- Fig. 1: ein Wälzlager einer Gasturbine im Querschnitt,
- Fig. 2 und 3: Teile des Wälzlagers nach Fig. 1 in weiteren Ansichten,
- Fig. 4 und 5: weitere Varianten von Wälzlagern für Gasturbinen in Ansichten analog Fig. 1.

Einander entsprechende oder gleichwirkende Teile sind in allen Figuren mit den gleichen Bezugszeichen gekennzeichnet.

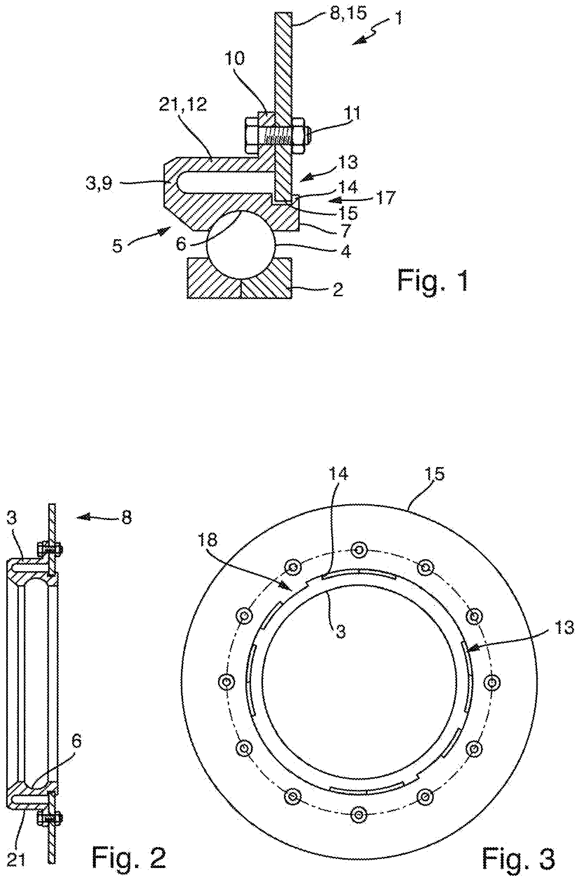

Ein in den Figuren 1 bis 3 dargestelltes, insgesamt mit dem Bezugszeichen 1 gekennzeichnetes Wälzlager ist als Kugellager ausgebindet und zum Einbau in eine Gasturbine zur Lagerung der Turbinenwelle vorgesehen. Hinsichtlich der prinzipiellen Funktion des Wälzlager 1 wird auf den eingangs zitierten Stand der Technik verwiesen.

Das Wälzlager 1 umfasst zwischen einem Innenring 2 und einem Außenring 3 angeordnete Wälzkörper 4, nämlich Kugeln. Statt auf dem im dargestellten Ausführungsbeispiel mehrteilig ausgebildeten Innenring 2 könnten die Wälzkörper 4 auch direkt auf einer Welle abrollen. Die einzelnen Wälzkörper 4 sind durch einen nicht dargestellten Käfig voneinander beabstandet und aus Stahl oder Keramik gefertigt.

Die Wälzkörper 4 rollen auf einem Laufbahnabschnitt 7 des Außenrings 3 ab. Der Laufbahnabschnitt 7 wird auch als "Außenring im engeren Sinne" bezeichnet. Auf der Innenseite des Laufbahnabschnitts 7 befindet sich eine rillenförmige Laufbahn 6 für die Wälzkörper 4, während die Außenseite des Laufbahnabschnitts 7 im Wesentlichen zylindrisch ist. Der Laufbahnabschnitt 7 des Außenrings 3 geht einstückig in einen radial nach außen gerichteten Umlenkabschnitt 9 über, welcher stirnseitig an den Laufbahnabschnitt 7 anschließt. Im Übergangsbereich zwischen dem Laufbahnabschnitt 7 und dem Umlenkabschnitt 9 ist eine Verjüngung 5 des Außenrings 3 ausgebildet, welche auf der Innenseite des Außenrings 3 eine konische Form beschreibt.

Der Umlenkabschnitt 9 wiederum, welcher im Querschnitt nach Fig. 1 ansatzweise eine U-Form beschreibt, geht über in eine Mehrzahl) an Federstäben 12, die parallel zur Achse des Wälzlagers 1 ausgerichtet und hierbei vom Laufbahnabschnitt 7 beabstandet sind.

Sämtliche Federstäbe 12 sind einstückig verbunden mit einem Flansch 10, der an einer Gehäusekonstruktion 8 mit Schrauben 11 festgeschraubt ist. Die Gesamtheit der Federstäbe 12 wird als Federabschnitt 21 des Außenrings 3 bezeichnet, Der Außenring 3 ist durch spanende Bearbeitung eines Werkstücks aus Stahl hergestellt.

Von besonderem Vorteil ist die in Axialrichtung raumsparende Form des Außenrings 3, dessen Federabschnitt 21 genau radial außerhalb des Laufbahnabschnitts 7 angeordnet ist und hierbei in keiner Axialrichtung über den Laufbahnabschnitt 7 hinausragt. Ebenso ist auch der Flansch 10 radial außerhalb des Laufbahnabschnitts 7 angeordnet und ragt hierbei in Axialrichtung nicht über diesen hinaus.

Die Gehäusekonstruktion 8, an welcher der Flansch 10 des Außenrings 3 befestigt ist, umfasst im Ausführungsbeispiel nach Fig. 1 eine Gehäusescheibe 15, welche sowohl radial nach innen als auch radial nach außen über den Flansch 10 hinausragt und mit ihrem radial inneren Rand in eine umlaufende Nut 13 in der Außenfläche des Laufbahnabschnitts 7 eingreift. Zwischen dem inneren Rand der Gehäusescheibe 15 und dem Grund der Nut 13 ist ein Spalt gebildet, welcher eine geringfügige Verlagerung des Laufbahnabschnitts 7 in Radialrichtung zulässt. Gleichzeitig ist damit ein Anschlag zwischen dem Laufbahnabschnitt 7 und der Gehäusekonstruktion 8 gebildet. Der genannte Spalt ist derart bemessen, dass in keinem Fall die im Wesentlichen zylindrische Au-ßenfläche des Laufbahnabschnitts 7 am Federabschnitt 21 oder am Flansch 10 anschlagen kann.

Zur dem Umlenkabschnitt 9 abgewandten Stirnseite 17 des Laufbahnabschnitts 7 hin ist die Nut 13 durch einen Bord 14 begrenzt. Dieser Bord 14 ist, wie aus Fig. 3 hervorgeht, mehrfach unterbrochen. In den unterbrochenen Abschnitten des Bordes 14 reicht der Nutgrund bis Stirnseite 17. Die Gehäusescheibe 15 weist an ihrem inneren Rand eine Mehrzahl an Gehäusenasen 18 auf, welche in die unterbrochenen Abschnitte des Bordes eingreifen können und somit ein Einschieben des Außenrings 3 in die Gehäusescheibe 15 ermöglichen. Nachdem der Außenring 3 in die Gehäusescheibe 15 eingeschoben ist, kann der Außenring 3 noch um einen begrenzten Winkel verdreht werden, bis zwischen Außenring 3 und Gehäusescheibe 15 gebildete Verdrehsicherungskonturen eine weitere Verdrehung stoppen. Auf diese Weise ist eine Zusammenwirkung zwischen Außenring 3 und Gehäusescheibe 15 in der Art eines Bajonettverschlusses gebildet. Hierbei bleiben jedoch durch entsprechende Spalte Freiheitsgrade des Laufbahnabschnitts 7 in beiden Axialrichtungen, in Radialrichtung, sowie in Umfangsrichtung gewahrt. Was die Umfangsrichtung betrifft, ist durch die Verdrehsicherungskonturen zwischen dem Außenring 3 und der Gehäusescheibe 15 eine Begrenzung der Verdrehung in einer Richtung, nämlich der Rotationsrichtung des Innenrings und damit der Hauptwelle der Gasturbine, ausreichend.

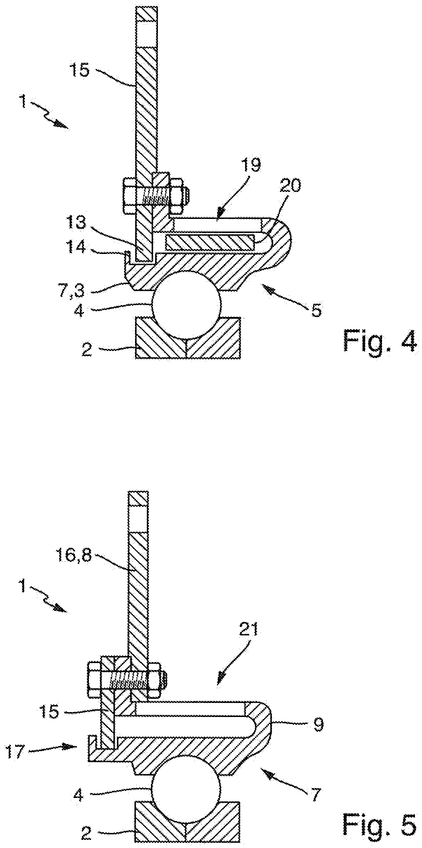

Das Ausführungsbeispiel nach Fig. 4 stimmt hinsichtlich der mechanischen Funktion, das heißt der elastischen Außenringaufhängung eines Wälzlager 1, mit dem Ausführungsbeispiel nach Fig. 1 überein. Innerhalb des Federabschnitts 21 ist in diesem Fall ein Durchbruch 19 zwischen zwei Federstäben 12 erkennbar. Weiter ist ein Dämpfungselement 20 erkennbar, welches radial zweischen der Außenfläche des Laufbahnabschnitts 7 und dem Federabschnitt 21 angeordnet und beispielsweise als Ring aus einem Elastomer ausgebildet ist.

Im Ausführungsbeispiel nach Fig. 5 sind als Komponenten der Gehäusekonstruktion 8 eine erste, vom Flansch 10 aus nach innen gerichtete Gehäusescheibe 15 sowie eine zweite, vom Flansch 10 aus nach außen gerichtete Gehäusescheibe 16 erkennbar. Beide Gehäusescheibe 15,16 sind mit den selben Schrauben 11 mit dem Außenring 3 verschraubt. Die innere Gehäusescheibe 15 ist aus zwei Einzelteilen, welche sich jeweils über einen Winkel von 180° erstrecken, zusammengesetzt. Somit ist in diesem Fall auch ohne Bjonettverschluss ein Eingriff der Gehäusescheibe 15 in die Nut 13 und damit eine beidseitig axiale Sicherung des Laufbahnabschnitts 7 des Außerrings 3 herstellbar.

### Bezugszeichenliste

- 1: Wälzlager
- 2: Innenring
- 3: Außenring
- 4: Wälzkörper
- 5: Verjüngung
- 6: Laufbahn
- 7: Laufbahnabschnitt
- 8: Gehäusekonstruktion
- 9: Umlenkabschnitt
- 10: Flansch
- 11: Schraube
- 12: Federstab
- 13: Nut
- 14: Bord
- 15: Gehäusescheibe
- 16: Gehäusescheibe
- 17: Stirnseite
- 18: Gehäusenase
- 19: Durchbruch
- 20: Dämpfungselement
- 21: Federabschnitt

## Patentansprüche

1. Wälzlageranordnung einer Gasturbine, mit
einer Anzahl zwischen einem Innenring (2) und einem Außenring (3) angeordneten Wälzkörpern (4),
einer Gehäusekonstruktion (8), an welcher der Außenring (3) federnd befestigt ist, wobei der Außenring (3) einteilig aufgebaut ist und einen eine Laufbahn (6) für die Wälzkörper (4) bildenden Laufbahnabschnitt (7), einen Federabschnitt (21) und einen mit der Gehäusekonstruktion (8) verschraubten Flansch (10) aufweist,
wobei der Federabschnitt (21) aus einer Mehrzahl an Federstäben (12) aufgebaut ist, welche einerseits an einen stirnseitig an den Laufbahnabschnitt (7) anschließenden Umlenkabschnitt (9) und andererseits an den Flansch (10) anschließen, radial außerhalb des Laufbahnabschnitts (7) angeordnet sind und hierbei in axialer Richtung einerseits nicht über den Umlenkabschnitt (9) und andererseits nicht über den Laufbahnabschnitt (7) hinausragen, und die Gehäusekonstruktion (8) mindestens eine Gehäusescheibe (15,16) umfasst,
**dadurch gekennzeichnet, dass** die Gehäusekonstruktion (8) sowohl einen radialen als auch einen axialen Anschlag gegenüber dem Laufbahnabschnitt (7) des Außenrings (3) bildet.

2. Wälzlageranordnung nach Anspruch 1, **dadurch gekennzeichnet, dass** die Gehäusekonstruktion (8) einen beidseitigen axialen Anschlag gegenüber dem Laufbahnabschnitt (7) des Außenrings (3) bildet.

3. Wälzlageranordnung nach Anspruch 1 oder 2, **dadurch gekennzeichnet, dass** die Gehäusekonstruktion (8) zusätzlich einen Anschlag in Umfangsrichtung gegenüber dem Laufbahnabschnitt (7) des Außenrings (3) bildet.

4. Wälzlageranordnung nach Anspruch 3, **dadurch gekennzeichnet, dass** die Gehäusekonstruktion (8) mehrteilig aufgebaut ist.

5. Wälzlageranordnung nach Anspruch 4, **dadurch gekennzeichnet, dass** die Gehäusekonstruktion (8) in der Art eines Bajonettverschlusses in Aussparungen im Laufbahnabschnitt (7) des Außenrings (3) eingreift.

6. Wälzlageranordnung nach einem der Ansprüche 1 bis 5, **dadurch gekennzeichnet, dass** die Wälzkörper (4) als Kugeln ausgebildet sind.

7. Wälzlageranordnung nach einem der Ansprüche 1 bis 6, **gekennzeichnet durch** ein zwischen dem Laufbahnabschnitt (7) und dem Federabschnitt (21) angeordnetes Dämpfungselement (20).

## Claims

1. Rolling bearing arrangement of a gas turbine, having a number of rolling bodies (4) arranged between an inner ring (2) and an outer ring (3), having a housing structure (8) to which the outer ring (3) is fastened in resilient fashion, wherein the outer ring (3) is of unipartite construction, has a raceway section (7) forming a raceway (6) for the rolling bodies (4), has a spring section (21), and has a flange (10) which is screwed to the housing structure (8),
wherein the spring section (21) is constructed from a multiplicity of spring bars (12), which spring bars, at one side, adjoin a diverting section (9) which adjoins the raceway section (7) at a face side, and which spring bars, at the other side, adjoin the flange (10), and which spring bars are arranged radially outside the raceway section (7) and, here, in an axial direction, at one side, do not project beyond the diverting section (9) and, at the other side, do not project beyond the raceway section (7), and the housing structure (8) comprises at least one housing disc (15, 16),
**characterized in that** the housing structure (8) forms both a radial and an axial abutment with respect to the raceway section (7) of the outer ring (3).

2. Rolling bearing arrangement according to Claim 1, **characterized in that** the housing structure (8) forms an axial abutment at both sides with respect to the raceway section (7) of the outer ring (3).

3. Rolling bearing arrangement according to Claim 1 or 2, **characterized in that** the housing structure (8) additionally forms an abutment in a circumferential direction with respect to the raceway section (7) of the outer ring (3).

4. Rolling bearing arrangement according to Claim 3, **characterized in that** the housing structure (8) is of multi-part construction.

5. Rolling bearing arrangement according to Claim 4, **characterized in that** the housing structure (8) engages in the manner of a bayonet fastener into recesses in the raceway section (7) of the outer ring (3).

6. Rolling bearing arrangement according to one of Claims 1 to 5, **characterized in that** the rolling bodies (4) are in the form of balls.

7. Rolling bearing arrangement according to one of Claims 1 to 6, **characterized by** a damping element (20) arranged between the raceway section (7) and the spring section (21).

## Revendications

1. Agencement de palier à roulement pour une turbine à gaz, comprenant une pluralité de corps de roulement (4) disposés entre une bague interne (2) et une bague externe (3), une construction de boîtier (8) au niveau de laquelle la bague externe (3) est fixée de manière élastique, la bague externe (3) étant construite d'une seule pièce et présentant une portion de chemin de roulement (7) formant un chemin de roulement (6) pour les corps de roulement (4), une portion de ressort (21) et une bride (10) vissée à la construction de boîtier (8),
la portion de ressort (21) étant construite à partir d'une pluralité de barres élastiques (12) qui se raccordent d'une part à une portion de renvoi (9) se raccordant du côté frontal à la portion de chemin de roulement (7) et d'autre part à la bride (10), qui sont disposées radialement à l'extérieur de la portion de chemin de roulement (7) et qui dans ce cas ne dépassent pas dans la direction axiale d'une part au-delà de la portion de renvoi (9) et d'autre part au-delà de la portion de chemin de roulement (7), et la construction de boîtier (8) comprenant au moins un disque de boîtier (15, 16),
**caractérisé en ce que** la construction de boîtier (8) forme à la fois une butée radiale et une butée axiale par rapport à la portion de chemin de roulement (7) de la bague externe (3).

2. Agencement de palier à roulement selon la revendication 1, **caractérisé en ce que** la construction de boîtier (8) forme une butée axiale des deux côtés par rapport à la portion de chemin de roulement (7) de la bague externe (3).

3. Agencement de palier à roulement selon la revendication 1 ou 2, **caractérisé en ce que** la construction de boîtier (8) forme en outre une butée dans la direction périphérique par rapport à la portion de chemin de roulement (7) de la bague externe (3).

4. Agencement de palier à roulement selon la revendication 3, **caractérisé en ce que** la construction de boîtier (8) est réalisée en plusieurs parties.

5. Agencement de palier à roulement selon la revendication 4, **caractérisé en ce que** la construction de boîtier (8) s'engage à la manière d'une fermeture à baïonnette dans des évidements dans la portion de chemin de roulement (7) de la bague externe (3).

6. Agencement de palier à roulement selon l'une quelconque des revendications 1 à 5, **caractérisé en ce que** les corps de roulement (4) sont réalisés sous forme de billes.

7. Agencement de palier à roulement selon l'une quelconque des revendications 1 à 6, **caractérisé par** un élément d'amortissement (20) disposé entre la portion de chemin de roulement (7) et la portion de ressort (21).
